# EUROPEAN PATENT APPLICATION

(11) **EP 4 793 771 A1**
(43) Date of publication of application: **19.08.2026**
(21) Application number: 24809542.4
(22) Date of filing: 30.09.2024
(51) Int. Cl.: G06F 9/50

(54) **RESOURCE MANAGEMENT METHOD AND APPARATUS, AND DEVICE**

(71) Applicant: New H3C Information Technologies Co., Ltd., Zhejiang 310056 (CN)
(72) Inventor: LIAO, Xiaojun, Beijing 100102 (CN); MAO, Honghua, Beijing 100102 (CN)
(74) Representative: 2SPL Patentanwälte PartG mbB
(86) International application number: PCT/CN2024/122726
(87) International publication number: WO 2026/065392

(57) **Abstract**

The present disclosure provides a resource management method, apparatus, and electronic device. According to the method, for each resource object, load data of each resource identification point included in the resource object is acquired, where the load data represents resource usage of the resource identification point, a load level of the resource object is determined based on the load data of each resource identification point; and an overload control object is determined based on the load level, where the overload control object includes at least one of a background task of the resource object, a foreground service object of the resource object, and a token bucket object for backpressuring host IO; and a resource occupied by the overload control object is controlled. The technical solution of the present disclosure can avoid that the current load exceeds the maximum processing capability of a distributed storage system, which can effectively improve the operating stability and service reliability of distributed storage systems.

## Description

### TECHNICAL FIELD

The present disclosure relates to the field of communication technologies, and in particular, to a resource management method, apparatus, and device.

### BACKGROUND

A distributed storage system can provide services such as data storage and data protection. The distributed storage system includes tasks such as feature value-add, cache flushing, deduplication and compression, garbage collection, and data reconstruction. The above tasks occupy a large quantity of resources of the distributed storage system, thereby increasing the load of the distributed storage system.

When the current load of a distributed storage system exceeds the maximum processing capacity of the distributed storage system, the situation may lead to an increased delay of IO (Input/Output) operation, an increased error rate, an IO operation failure, and even a service interruption, and a distributed storage system failure.

### SUMMARY

The present disclosure provides a resource management method, applied to a distributed storage system including a plurality of resource objects, where the method includes:
for each resource object, acquiring load data of each of at least one resource identification point included in the resource object, where the load data represents resource usage of the resource identification point;
determining a load level of the resource object based on the load data of each resource identification point;
in response to determining that the resource object is overloaded based on the load level, determining an overload control object based on the load level, where the overload control object includes at least one of a background task of the resource object, a foreground service object of the resource object, and a token bucket object for backpressuring host IO, and the background task and the foreground service object share a local token bucket of the resource object; and
controlling a resource occupied by the overload control object.

The present disclosure provides a resource management apparatus, applied to a distributed storage system including a plurality of resource objects, where the apparatus includes: an acquiring module, which is to, for each resource object, acquire load data of each of at least one resource identification point included in the resource object, where the load data represents resource usage of the resource identification point;
a determining module, which is to determine a load level of the resource object based on the load data of each resource identification point; and in response to determining that the resource object is overloaded based on the load level, determine an overload control object based on the load level, where the overload control object includes at least one of a background task of the resource object, a foreground service object of the resource object, and a token bucket object for backpressuring host IO, and the background task and the foreground service object share a local token bucket of the resource object; and
a control module, which is to: control a resource occupied by the overload control object.

The present disclosure provides an electronic device, including: a processor and a machine-readable storage medium, where the machine-readable storage medium stores machine-executable instructions that can be executed by the processor, and the processor is to execute the machine-executable instructions to perform the resource management method described above.

The present disclosure provides a computer program product including a computer program, and the computer program causes a processor to perform the resource management method described above when executed by the processor.

The present disclosure provides a machine-readable storage medium, the machine-readable storage medium stores machine-executable instructions that can be executed by a processor, where the processor is to execute the machine-executable instructions to perform the resource management method described above.

It can be seen from the above technical solution that, in an example of the present disclosure, the load level of the resource object can be recognized timely and accurately, the overload control object can be determined based on the load level, and the resource occupied by the overload control object can be controlled, thereby reducing the resource occupied by the overload control object, avoiding that the current load of the distributed storage system exceeds the maximum processing capacity of the distributed storage system, reducing the delays of IO operations, enabling IO operations to have stable delays, reducing the error rate of IO operations, avoiding IO operation failures, and preventing problems such as service interruptions or distributed storage system failures, which effectively improves the operating stability and service reliability of the distributed storage system.

### BRIEF DESCRIPTION OF DRAWINGS

FIG. 1 is a schematic flow diagram of a resource management method according to an example of the present disclosure.
FIG. 2 is a schematic diagram showing performance of an IO operation when a distributed storage system is overloaded.
FIG. 3 is a schematic diagram of resource identification points of resource objects.
FIG. 4 is a schematic structure diagram of a distributed storage system.
FIG. 5 is a schematic diagram of foreground services and background tasks associated with resource objects.
FIG. 6 is a schematic diagram of an overload control framework.
FIG. 7 is a schematic structure diagram of a resource management apparatus according to an example of the present disclosure.
FIG. 8 is a hardware structure diagram of an electronic device according to an example of the present disclosure.

### DETAILED DESCRIPTION

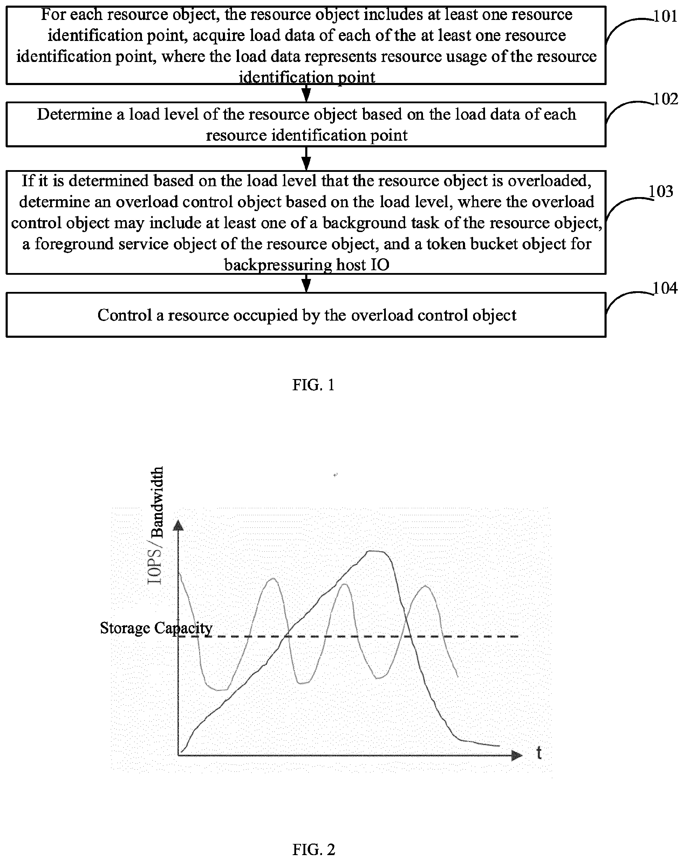

In examples of the present disclosure, a resource management method is proposed, the method may be applied to a distributed storage system. The distributed storage system may include a plurality of resource objects, for each resource object, the resource object may be a storage node or a storage pool, and there are no restrictions on the types of the resource object. Referring to FIG. 1, which is a flow diagram of the method, the method may include:

In Block 101, for each resource object, the resource object includes at least one resource identification point, load data of each of the at least one resource identification point is acquired, where the load data represents resource usage of the resource identification point.

In Block 102, a load level of the resource object is determined based on the load data of each resource identification point.

In Block 103, if it is determined based on the load level that the resource object is overloaded , an overload control object is determined based on the load level, where the overload control object may include at least one of a background task of the resource object, a foreground service object of the resource object, and a token bucket object for backpressuring host IO, and the background task and the foreground service object share a local token bucket of the resource object.

In Block 104, a resource occupied by the overload control object is controlled.

In an example, if the resource object is a storage node, the resource object may include but is not limited to at least one of the following resource identification points: a central processing unit (CPU) identification point, a memory identification point, a metadata database identification point, a write cache identification point, a read cache identification point, a token bucket identification point, a storage pool identification point, and a cache background task identification point. If the resource object is a storage pool, the resource object may include, but is not limited to, at least one of the following resource identification points: a memory identification point, a write cache identification point, a read cache identification point, a token bucket identification point, and a cache background task identification point.

The load data of the CPU identification point may include a CPU usage rate of the storage node; the load data of the memory identification point may include a remaining memory of the storage node; the load data of the metadata database identification point may include a CPU usage rate of a metadata database; the load data of the write cache identification point may include a watermark and a delay of a write cache (also referred to as a write cache watermark and a write cache delay); the load data of the read cache identification point may include a delay of a read cache; the load data of the token bucket identification point may include a wait token delay of an IO operation; the load data of the storage pool identification point may include a foreground IO statistical delay; and the load data of the cache background task identification point may include a background task read delay.

In an example, the method may further include one or more of the following: for the load data of the token bucket identification point, a target ratio between a data length of an IO operation and a set standard IO length may be determined, and a wait token delay of the IO operation is determined based on the target ratio and a standard delay corresponding to the standard IO length; where the standard delay may represent a delay for processing data of the standard IO length. For the CPU usage rate of the storage node, if the storage node includes a plurality of CPU cores, a usage rate of a CPU core bound to an IO operation may be determined, and a CPU usage rate of the storage node is determined based on the usage rate. For the CPU usage rate of the metadata database, if the storage node includes a plurality of CPU cores, a usage rate of a CPU core bound to the metadata database may be determined, and a CPU usage rate of the metadata database is determined based on the usage rate.

In an example, the first level interval includes K number of control levels, the resource object includes background tasks with K number of priorities, the K number of priorities are in one-to-one correspondence with the K number of control levels; if the load level matches a control level of the first level interval, the overload control object may include a background task with a priority corresponding to the control level. Or, the second level interval includes P number of control levels, the resource object includes foreground service objects with P number of priorities, the P number of priorities are in one-to-one correspondence with the P number of control levels; if the load level matches a control level of the second level interval, the overload control object may include a foreground service object with a priority corresponding to the control level and background tasks with all priorities. Or, if the load level matches the third level interval, the overload control object may include a token bucket object for backpressuring host IO, foreground service objects with all priorities, and background tasks with all priorities; where the control levels of the first level interval are lower than the control levels of the second level interval, and the control levels of the second level interval are lower than the control levels of the third level interval.

In an example, controlling the resource occupied by the overload control object may include, but is not limited to: lowering or raising (e.g., lowering in a case of overload, raising in a case of underload) a current resource gear level of the overload control object to obtain a controlled resource gear level; controlling the resource occupied by the overload control object based on the controlled resource gear level; where a token bucket resource occupied by the overload control object may be controlled based on a token quantity corresponding to the controlled resource gear level, and/or, a processing resource occupied by the overload control object may be controlled based on a concurrency number corresponding to the controlled resource gear level; where the lower the controlled resource gear level, the smaller the token quantity and the concurrency number corresponding to the controlled resource gear level.

In an example, determining an overload control object based on the load level may include, but is not limited to: if the load level matches a control level of the first level interval, and there are a plurality of background tasks with a priority corresponding to the control level, selecting a target resource identification point from all resource identification points based on the load data of each resource identification point, and selecting a target background task from a plurality of background tasks based on the target resource identification point, where a background task sensitive to the target resource identification point is used as the target background task, and the background task sensitive to the target resource identification point means that when a resource occupied by the background task is adjusted, load data of the target resource identification point changes significantly, and when a resource occupied by other background tasks other than the background task is adjusted, the load data of the target resource identification point changes slightly; and determining the target background task as an overload control object.

In an example, controlling the resource occupied by the overload control object may include, but is not limited to: if the overload control object is a foreground service object of the resource object, and a plurality of different foreground service objects correspond to a plurality of priority queues, a token quantity corresponding to the overload control object is determined, the resource object is controlled to read data from the plurality of priority queues based on the token quantity, and the read data is processed. The plurality of priority queues share a token bucket, and different priority queues are used to control dequeuing, i.e., when data in different priority queues is dequeued, a token is taken from a token bucket.

If the overload control object is a token bucket object for backpressuring host IO, and the token bucket object corresponds to a plurality of priority queues, a token quantity corresponding to the overload control object is determined, the resource object is controlled to read data from the plurality of priority queues based on the token quantity, and the read data is processed.

When data is read from the plurality of priority queues based on the token quantity, a sequence value of each piece of data in the plurality of priority queues may be determined, and a piece of data with a smallest sequence value is read. For example, for each piece of data, a sequence value of the piece of data is determined based on an enqueue time of the piece of data and an adjustment value of a priority queue where the piece of data is located; where if the enqueue time of the piece of data is earlier, the sequence value of the piece of data is smaller, and if the priority of the priority queue is higher, the adjustment value is smaller, and the sequence value of the piece of data is smaller.

In an example, after controlling the resource occupied by the overload control object, the statistics on the load level of the resource object may continue to be conducted. If the resource object is determined to be underloaded based on the load level, a load of the overload control object is recovered. When the load of the overload control object is recovered, a load of a token bucket object for backpressuring host IO is recovered first, if the resource object is determined to be underloaded based on the load level, a load of a foreground service object of the resource object is recovered next, and if the resource object is determined to be underloaded based on the load level, a load of a background task of the resource object is recovered next.

It can be seen from the above technical solution that, in an example of the present disclosure, the load level of the resource object can be recognized timely and accurately, the overload control object can be determined based on the load level, and the resource occupied by the overload control object can be controlled, thereby reducing the resource occupied by the overload control object, avoiding that the current load of the distributed storage system exceeds the maximum processing capacity of the distributed storage system, reducing the delays of IO operations, enabling IO operations to have stable delays, reducing the error rate of IO operations, avoiding IO operation failures, and preventing problems such as service interruptions or distributed storage system failures, which effectively improves the operating stability and service reliability of the distributed storage system.

The resource management method in examples of the present disclosure is described below in conjunction with specific application scenarios.

A distributed storage system can provide services such as data storage and data protection, and the data storage and the data protection are IO operations (i.e., host IO operations) for the distributed storage system. In addition to IO operations, the distributed storage system also includes tasks such as feature value-add, cache flushing, deduplication and compression, garbage collection, and data reconstruction. The above tasks occupy a large quantity of resources of the distributed storage system, thereby increasing the load of the distributed storage system. When the current load of a distributed storage system exceeds the maximum processing capacity of the distributed storage system, i.e., the distributed storage system is overloaded, the situation may lead to an increased delay of IO (Input/Output) operation, an increased error rate, an IO operation failure, and even a service interruption, and a distributed storage system failure.

Referring to FIG. 2, which is a schematic diagram showing performance of an IO operation when a distributed storage system is overloaded. In response to the storage requirements under high concurrency and sudden pressure, requests accumulate at the bottom layer of the storage, and performance fluctuates greatly. Background tasks compete for resources of the distributed storage system, leading to a dramatic drop of IO operation performance, or even dropping completely to 0.

In view of the above findings, the example proposes a resource management method. When a distributed storage system is overloaded, the method can timely and accurately recognize the cause of overload, take appropriate overload handling measures in time, ensure that the distributed storage system operates reliably, and effectively improve the operating stability and service reliability of the distributed storage system.

In the example, a resource management method is proposed, which may involve the process as described below.

Firstly, the load data collection of the distributed storage system. For example, the load data of the distributed storage system is periodically collected, and load recognition and control of the distributed storage system are performed based on the load data.

In an example, the storage resources of the distributed storage system may be referred to as resource objects, and the resource objects may be a storage node or a storage pool, i.e., resource objects are divided into two types: a storage node and a storage pool, each storage node or storage pool corresponds to a resource object. A storage node provides storage resources in the form of a single server and may also be referred to as a storage server. A storage pool provides storage resources in the form of a cluster and the storage resources within the storage pool may be dynamically expanded or shrunk.

For each resource object, the resource object may include at least one resource identification point, which may also be referred to as a resource load type, i.e., the resource object may be composed of a plurality of resource load types. Based on this, the load data of each resource identification point may be acquired, and the load data represents the resource usage of the resource identification point, and the load data of all resource identification points constitutes the load data of the resource object.

In summary, for each resource object, the load data of the resource object may be periodically collected, and the load data may include the load data of each resource identification point of the resource object.

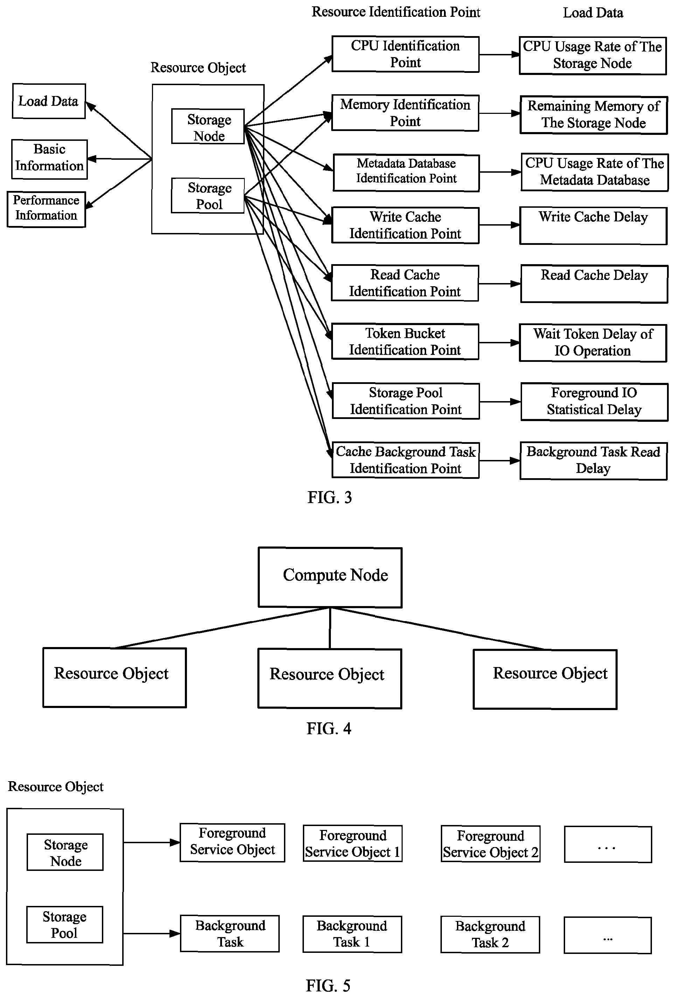

In an example, referring to FIG. 3, which is a schematic diagram of resource identification points of resource objects. For each resource object, if the resource object is a storage node, the resource object may include, but is not limited to, at least one of the following resource identification points (resource load types): a CPU identification point, a memory identification point, a metadata database identification point, a write cache identification point, a read cache identification point, a token bucket identification point, a storage pool identification point, and a cache background task identification point. If the resource object is a storage pool, the resource object may include, but is not limited to, at least one of the following resource identification points (resource load types): a memory identification point, a write cache identification point, a read cache identification point, a token bucket identification point, and a cache background task identification point. The above are just a few examples of the resource identification points, as long as the resource identification point can reflect the resource usage of the resource object.

The load data of the CPU identification point may include, but is not limited to, a CPU usage rate of a storage node. For example, if the storage node includes a plurality of CPU cores, a usage rate of a CPU core bound to an IO operation may be determined, and a CPU usage rate of the storage node is determined based on the usage rate. The CPU core bound to an IO operation means that the IO operation is processed through the CPU core. The IO operations are IO operations for the storage node, e.g., operations such as writing data to the storage node, and reading data from the storage node. The usage rate of a CPU core represents a usage percentage threshold of this CPU core, e.g., 50%, which means that 50% resources of the CPU core have been used.

The load data of the memory identification point may include, but is not limited to, the remaining memory of the storage node (or the remaining memory of the storage pool). For example, for a storage node or a storage pool, the available memory of the storage node or storage pool may be used as the remaining memory of the storage node or the storage pool.

The load data of the metadata database identification point may include, but is not limited to, a CPU usage rate of the metadata database. The metadata database refers to a database (DB) used to store metadata, and the metadata is metadata for stored data, which may include the storage location, data identifier, etc. of the stored data. There are no restrictions on the metadata. For example, if the storage node includes a plurality of CPU cores, a usage rate of a CPU core bound to a metadata database may be determined, and a CPU usage rate of the metadata database is determined based on the usage rate of the CPU core, e.g., the usage rate of the CPU core is used as the CPU usage rate of the metadata database. The CPU core bound to a metadata database means that the metadata database is managed through the CPU core. The usage rate of a CPU core represents a usage percentage threshold of this CPU core, e.g., 50%, which means that 50% resources of the CPU core have been used.

The load data of the write cache identification point may include, but is not limited to, a write cache watermark and a write cache delay. For example, for a storage node or a storage pool, the write cache delay refers to the time taken to write data, i.e., the delay time for data writing. The longer the write cache delay, the worse the writing performance of the storage node or storage pool, which needs longer time to complete data writing.

The load data of the read cache identification point may include, but is not limited to, a read cache delay. For example, for a storage node or a storage pool, the read cache delay refers to the time taken to successfully read data, i.e., the delay time for data reading. The longer the read cache delay, the worse the reading performance of the storage node or storage pool, which needs longer time to complete data reading.

The load data of the token bucket identification point may include, but is not limited to, a wait token delay of an IO operation, which may also be referred to as a token waiting delay of a host IO. For example, for a storage node or a storage pool, a target ratio between a data length of an IO operation and a set standard IO length is determined, and a wait token delay of the IO operation is determined based on the target ratio and a standard delay corresponding to the standard IO length, i.e., the load data of the token bucket identification point.

The data length of an IO operation means that the storage node or storage pool processes the IO operation of the data length, and the data length may be 16KB, 32KB, 64KB, etc. A data length of 16KB means that the storage node or storage pool may process an IO operation of a data length of 16KB.

The standard IO length refers to a standardized data length, which may be a preconfigured data length, e.g., the standard IO length may be 8KB, 16KB, etc. The standard delay may represent the delay of processing data of the standard IO length, i.e., the delay for the standard IO length. For example, if the standard IO length is 8KB, the statistics on the standard delay for 8KB data length may be conducted, i.e., when the storage node or storage pool processes an IO operation with a data length of 8KB, the statistics on the delay of the IO operation are conducted, and the delay is used as the standard delay.

Based on this, the ratio relationship between the data length and the standard IO length (i.e., a target ratio) may be preconfigured, e.g., the ratio relationship of the data length of 32KB to the standard IO length of 8KB is set to be 2:1. If it is known that the sampling delay (i.e., the standard delay) of 32KB (maybe only 32KB, without 8KB services) is 4ms, the standardized delay of 8KB in the current environment is 2ms, which is a wait token delay of the IO operation.

The load data of the storage pool identification point may include, but is not limited to, a foreground IO statistical delay, which may also be referred to as a persistent request processing delay. For example, for a storage node, the foreground IO statistical delay refers to a statistical delay value of persisting data to a disk when the data needs to be persisted to the disk.

The load data of the cache background task identification point may include, but is not limited to, a background task read delay and a token delay of a background task. For example, for a storage node or a storage pool, the background task read delay may be a completion read delay of a cache background, or the background task read delay may be a prefetch read delay of a cache background. The token delay of a background task refers to time it takes for the background task to get the token and then being processed.

The above examples introduce the load data of each resource identification point, and there are no restrictions on the load data.

In an example, referring to FIG. 3, for each resource object, e.g., a storage node or a storage pool, etc., the basic information of the resource object may be recorded, i.e., the basic information used to describe the resource object. For example, the basic information may include, but is not limited to, at least one of the following: the unique identifier of the resource object, the disk type of the resource object (i.e., the disk type of storage media used by the resource object to store data), etc.

For each resource object, e.g., a storage node or a storage pool, etc., the performance information of the resource object may be recorded, i.e., the performance information used to describe the resource object, where a performance entry corresponds to a resource identification point.

In summary, for each resource object, e.g., a storage node or a storage pool, etc., the load data of the resource object may be periodically collected, and the load data may include the load data of each resource identification point of the resource object. There are no restrictions on the collection process of the load data, and the load data of the resource object is recorded.

It may be seen from the above that, in the process of collecting load data of the distributed storage system, for each resource object, the basic information, the performance information, and the load data of the resource object may be recorded.

Secondly, the overload recognition (OLR) of the distributed storage system. For example, for each resource object, e.g., a storage node or a storage pool, etc., after obtaining the load data of the resource object, which includes the load data of each resource identification point, the load level of the resource object is determined based on the load data of each resource identification point, and whether the resource object is overloaded is determined based on the load level of the resource object.

In an example, in the process of collecting load data of the distributed storage system, the basic information, the performance information, and load data of each resource identification point of a resource object may be recorded. In the process of overload recognition of the distributed storage system, the changed load data (e.g., when load data of a resource identification point changes, the load data of the resource identification point is recorded) may also be recorded, and the load level of the resource object may be determined based on the load data of each resource identification point.

In summary, the basic information and performance information of the resource object, load data of each resource identification point, changed load data, and the load level of the resource object may be recorded.

In an example, the load data of each resource identification point may be normalized, i.e., these load data is normalized to a same specified numeric interval (e.g., a numeric interval 0-1, or 0-100, etc.). For example, the CPU usage rate 1 of the storage node may be normalized to obtain a normalized CPU usage rate 2 located in the specified numeric interval. The greater the CPU usage rate 1, the greater the load, and the greater the CPU usage rate 2. The remaining memory 1 of the storage node may be normalized to obtain a normalized remaining memory 2 of the storage node located in the specified numeric interval. The greater the remaining memory 1 of the storage node, the smaller the load, and the smaller the remaining memory 2 of the storage node.

A CPU usage rate 3 of the metadata database may be normalized to obtain a normalized CPU usage rate 4 located in the specified numeric interval. The greater the CPU usage rate 3, the greater the load, and the larger the CPU usage rate 4. A write cache delay 1 may be normalized to obtain a normalized write cache delay 2 located in the specified numeric interval. The greater the write cache delay 1, the greater the load, and the greater the write cache delay 2. A read cache delay 1 may be normalized to obtain a normalized read cache delay 2 located in the specified numeric interval. The greater the read cache delay 1, the greater the load, and the greater the read cache delay 2.

A wait token delay 1 of an IO operation may be normalized to obtain a normalized statistical delay 2 located in the specified numeric interval. The greater the wait token delay 1, the greater the load, and the greater the statistical delay 2. A foreground IO statistical delay 1 may be normalized to obtain a normalized foreground IO statistical delay 2 located in the specified numeric interval. The greater the foreground IO statistical delay 1, the greater the load, and the greater the foreground IO statistical delay 2. A background task read delay 1 may be normalized to obtain a normalized background task read delay 2 located in the specified numeric interval. The greater the background task read delay 1, the greater the load, and the greater the background task read delay 2.

After obtaining these normalized load data, a weighting operation may be performed on these normalized load data to obtain a load parameter value. For example, a weighting operation may be performed on the CPU usage rate 2, the remaining memory 2 of the storage node, the CPU usage rate 4, the write cache delay 2, the read cache delay 2, the statistical delay 2, the foreground IO statistical delay 2, and the background task read delay 2, and the result of the weighting operation may represent a load parameter value. When the weighting operation is performed on these normalized load data, the weight coefficients of different load data may be the same or may be different. For example, the weight coefficient of the CPU usage rate 2 may be the same as or different from the weight coefficient of the remaining memory 2 of the storage node, and the weight coefficient of the CPU usage rate 2 may be the same as or different from the weight coefficient of the CPU usage rate 4. There are no restrictions on the weight coefficients of the load data.

Assuming that a total of W number of load levels need to be obtained by a division, if the specified numeric interval is a numeric interval 0-100, and the sum of the weight coefficient values of all load data is 1, i.e., the load parameter value is also located in the numeric interval 0-100, then the numeric interval 0-100 may be divided into W number of numeric intervals, and the length of different numeric intervals may be the same or different. For example, if W is 10, the numeric intervals 0-10, 11-20, ..., and 91-100 may be obtained by the division.

Based on this, if the load parameter value is located in the numeric interval 0-10, it means that the load level of the resource object is 1. If the load parameter value is located in the numeric interval 11-20, it means that the load level of the resource object is 2, and so on. If the load parameter value is located in the numeric interval 91-100, it means that the load level of the resource object is 10. In summary, based on a numeric interval where the load parameter value is located, a load level corresponding to the numeric interval (numeric intervals and load levels are in one-to-one correspondence) may be taken as the load level of the resource object.

For example, after obtaining the load level of the resource object, when the load level of the resource object is relatively small, e.g., 1, 2, 3, etc., it is determined that the resource object is not overloaded based on the load level, and when the load level of the resource object is relatively large, e.g., 8, 9, 10, etc., it is determined that the resource object is overloaded based on the load level.

Thirdly, the recognition process of the overload control object of the distributed storage system. For example, for each resource object, e.g., a storage node or a storage pool, etc., after obtaining the load level of the resource object, whether the resource object is overloaded may be determined based on the load level. For example, the load levels may be divided into levels such as underload, normal, and overload. In the case of underload, an overload recovery process of the distributed storage system may be performed, as seen in the subsequent process. In the normal case, the overload recovery process of the distributed storage system is not performed, nor is the overload control process of the distributed storage system executed. Instead, the current state is maintained. When the resource object is determined to be overloaded based on the load level, the overload control object may be determined based on the load level, i.e., overload control needs to be performed on the overload control object, so as to reduce the load of the resource object. The overload control object may include at least one of a background task of the resource object, a foreground service object of the resource object, and a token bucket object for backpressuring host IO.

In an example, referring to FIG. 4, which is a schematic structure diagram of a distributed storage system. The distributed storage system may include a plurality of resource objects. For each resource object, the resource object may be a storage node or a storage pool. A client may send data to be stored to a compute node, and the compute node writes the data to be stored to a high-speed storage area for the resource object, e.g., a solid state drive (SSD), etc. For the case of a plurality of replicas, the compute node may store one copy of the data into a plurality of resource objects at the same time. The resource object may read data in the SSD (reading a plurality of pieces of data at once) and write the read data to a low-speed storage area of the resource object, e.g., a hard solid state drive (HDD), etc. Similarly, in the data reading process, the compute node may read data from the resource object and return the read data to the client.

For the resource object, the resource object may maintain a local token bucket and a token bucket for backpressuring host IO (which may also be referred to as a global token bucket). For the token bucket used for backpressuring host IO, by controlling the quantity of tokens in the token bucket, the rate at which the compute node (which may also be referred to as the host) writes data into the resource object and the rate at which the compute node reads data from the resource object may be controlled. Therefore, the above control process is referred to as backpressuring host IO, i.e., the token bucket can control the host IO of the compute node. For the token bucket used for backpressuring host IO, the initial quantity of tokens in the token bucket may be set based on experience, and the quantity of tokens in the token bucket may be adjusted in the running process of the resource object. The process of performing overload control on the overload control object is the process of adjusting the quantity of tokens, which achieves the purpose of reducing the load by reducing the quantity of tokens.

For the local token bucket of a resource object, the foreground service objects and background tasks of the resource object share this local token bucket. The initial quantity of tokens in the local token bucket may be set based on experience, and the quantity of tokens in the local token bucket may also be adjusted in the running process of the resource object.

For example, the services related to IO operations are referred to as the foreground service objects, and foreground service objects may also be referred to as IO operation services. For example, data writing (e.g., writing data to an SSD of a resource object by a compute node) and data reading (e.g., reading data from a resource object by a compute node) for a resource object are referred to as foreground service objects of the resource object. Further, the remaining tasks of the resource object except for the foreground service objects are referred to as background tasks, and background tasks are tasks that are not in the foreground host service IO processes. For example, feature value-add tasks, deduplication and compression tasks, garbage collection tasks, and data reconstruction tasks, etc., are all the background tasks of the resource object. The above are just a few examples of background tasks, and there are no restrictions on the background tasks, which may be any task supported by the resource object.

In summary, the overload control object of the resource object may be divided into foreground service objects and background tasks. Foreground service objects include IO operations on volumes (i.e., data writing and reading performed on volumes), IO operations on files (i.e., data writing and reading for files), and other types of foreground service objects. In addition, the background tasks may include, but are not limited to, feature value-add tasks, cache flushing tasks, deduplication and compression tasks, garbage collection tasks, and data reconstruction tasks, etc.

In an example, the first level interval may be preconfigured, and the priorities of background tasks may be configured. For example, the first level interval includes K number of control levels, the resource object includes background tasks with K number of priorities, the K number of priorities are in one-to-one correspondence with the K number of control levels, and K may be a positive integer.

For example, if K is 3, the first level interval includes a control level 1, a control level 2, and a control level 3, and the K number of priorities include a high priority, a medium priority, and a low priority. For another example, if K is 2, the first level interval includes a control level 1 and a control level 2, and the K number of priorities include a high priority, and a low priority. The quantity of control levels and priorities may be more, and there are no restrictions on this.

For example, assuming that the resource object corresponds to a total of 10 load levels, a control level 1 may correspond to a load level 4, a control level 2 may correspond to a load level 5, and a control level 3 may correspond to a load level 6. The load level 4, load level 5, and load level 6 mean that there is a certain overload, but the overload is not serious. When the load level is lower than the control level 1, e.g., the load level is 1, 2, or 3, it means underload or normal.

All background tasks may be divided into high-priority background tasks, medium-priority background tasks, and low-priority background tasks. High-priority background tasks correspond to the control level 3, medium-priority background tasks correspond to the control level 2, and low-priority background tasks correspond to the control level 1.

In an example, the second level interval may be preconfigured, and the priorities of foreground service objects are also configured. For example, the second level interval includes P number of control levels, and the resource object includes the foreground service objects with P number of priorities, the P number of priorities and the P number of control levels are in one-to-one correspondence, and P may be a positive integer.

For example, the control levels of the first level interval may be lower than the control levels of the second level interval. For example, P is 3, the second level interval includes a control level 4, a control level 5, and a control level 6, and the P number of priorities include a high priority, a medium priority, and a low priority. For another example, P is 2, the second level interval includes a control level 3 and a control level 4, and the P number of priorities include a high priority and a low priority.

For example, assuming that the resource objects correspond to a total of 10 load levels, the control level 4 may correspond to a load level 7, the control level 5 may correspond to a load level 8, and the control level 6 may correspond to a load level 9. The load level 7, load level 8, and load level 9 mean that there is an overload, and the overload is serious.

All foreground service objects may be divided into high-priority foreground service objects, medium-priority foreground service objects, and low-priority foreground service objects. High-priority foreground service objects correspond to the control level 6, medium-priority foreground service objects correspond to the control level 7, and low-priority foreground service objects correspond to the control level 8. For example, IO operations on file 1 may be taken as high-priority foreground service objects, and IO operations on file 2 may be taken as medium-priority foreground service objects, and so on.

In an example, for each resource object, object information of the foreground service objects associated with the resource object may be recorded. The object information of the foreground service objects may include, but is not limited to: a type (lun/fs), an object identifier, a priority (such as high priority, medium priority, and low priority).

In an example, for each resource object, object information of the background tasks associated with the resource object may be recorded. The object information of the background tasks may include, but is not limited to: a background task type (e.g., background tasks such as feature value-add tasks, cache flushing tasks, deduplication and compression tasks, garbage collection tasks, and data reconstruction tasks), an object identifier, a current resource gear level, a resource gear level lower limit value, a resource gear level upper limit value, a resource sensitivity type (e.g., a CPU identification point, a memory identification point, a write cache identification point, etc.), a background task control type and strategy (e.g., controlling by using a token bucket or controlling by using concurrency), whether foreground-background balance is needed (if needed, it means that the background task is closely related to the foreground service), whether there is an event affecting reliability, and a priority (such as a high priority, a medium priority, and a low priority).

In the overload control process, the foreground services and background tasks of the resource object need to maintain a balance. Therefore, for background tasks that need a foreground-background balance, or for background tasks that have been marked as "with events affecting reliability", the priority needs to be raised, i.e., these background tasks are taken as high-priority background tasks, so as to reduce the probability of these background tasks being controlled, which ensures that these background tasks run as normally as possible.

It may be seen from the above that, for each resource object, the priorities of the foreground service objects associated with the resource object and the priorities of the background tasks associated with the resource object may be known.

Referring to FIG. 5, which is a schematic diagram of foreground service objects and background tasks associated with resource objects. A resource object may be a storage node or a storage pool, and the resource object may be associated with a plurality of background tasks. These background tasks may correspond to K number of priorities. For example, a background task 1 and a background task 2 correspond to a high priority, a background task 3 and a background task 4 correspond to a medium priority, and a background task 5 corresponds to a low priority. The resource object may also be associated with a plurality of foreground service objects, and these foreground service objects may correspond to P number of priorities.

In an example, when determining the overload control object based on the load level, the control sequence of background tasks before foreground service objects may be adopted, and for background tasks, the control sequence of low priority, medium priority, and high priority is adopted, and for foreground service objects, the control sequence of low priority, medium priority, and high priority is adopted.

In an example, when determining the overload control object based on the load level, local overload control may be attempted first, and global overload control may be carried out if the local overload control fails. For example, local overload control means taking the background tasks of the resource object and the foreground service objects of the resource object as the overload control object and performing overload control on the overload control object. In addition, global overload control means taking the token bucket object for backpressuring host IO as the overload control object and performing overload control on the overload control object.

To achieve the control sequence of background tasks before foreground service objects, and the control sequence of local overload control before global overload control, if the load level of the resource object matches a control level of the first level interval, the overload control object may include the background tasks of the resource object, i.e., the background tasks of the resource object may be taken as the overload control object, and overload control may be performed on the overload control object. If the load level of the resource object matches a control level of the second level interval, the overload control object may include the background tasks and foreground service objects of the resource object, i.e., the background tasks of the resource object and foreground service objects of the resource object may be taken as the overload control object, and overload control may be performed on the overload control object. Based on the above control process, the control sequence of background tasks before foreground services may be achieved.

In addition, if the load level matches a control level of the third level interval, the overload control object may include the background tasks of the resource object, the foreground service objects of the resource object, and a token bucket object for backpressuring host IO, i.e., the background tasks, foreground service objects, and token bucket object for backpressuring host IO of the resource object may be taken as the overload control object, and overload control may be performed on the overload control object. Based on the above control process, the control sequence of local overload control before global overload control may be achieved.

The third level interval may be preconfigured in advance, the control levels of the second level interval are lower than the control levels of the third level interval. Assuming that the resource objects correspond to a total of 10 load levels, the third level interval may include a control level 7, and the control level 7 may correspond to a load level 10. The load level 10 means that there is an overload, and the overload is significantly serious, and overload control needs to be performed on the token bucket object for backpressuring host IO.

In an example, for background tasks, the control sequence of low priority, medium priority, and high priority is adopted. Based on this, if the load level of the resource object matches a control level of the first level interval, the overload control object may include the background tasks with a priority corresponding to the control level and the background tasks with a priority lower than the priority. For example, if the load level of the resource object matches the control level 1 (the control level 1 may correspond to a load level 4), e.g., the load level is the load level 4, low-priority background tasks are taken as the overload control object. If the load level of the resource object matches control level 2, e.g., the load level is load level 5, low-priority and medium-priority background tasks are taken as the overload control object. If the load level of the resource object matches control level 3, e.g., the load level is load level 6, the low-priority, medium-priority, and high-priority background tasks are taken as the overload control object.

For foreground service objects, the control sequence of low priority, medium priority, and high priority is adopted. Based on this, if the load level of the resource object matches a control level of the second level interval, the overload control object may include the foreground service objects with a priority corresponding to the control level, the foreground service objects with a priority lower than the priority, and background tasks with all priorities. For example, if the load level of the resource object matches control level 4, such as load level 7, low-priority foreground service objects and background tasks with all priorities are taken as the overload control object. If the load level of the resource object matches control level 5, e.g., the load level is load level 8, medium-priority foreground service objects, low-priority foreground service objects, and background tasks with all priorities are taken as the overload control object. If the load level of the resource object matches control level 6, e.g., the load level is load level 9, high-priority foreground service objects, medium-priority foreground service objects, low-priority foreground service objects, and background tasks with all priorities are taken as the overload control object.

In addition, if the load level of the resource object matches control level 7 of the third level interval, e.g., the load level is load level 10, the token bucket object for backpressuring host IO, foreground service objects with all priorities, and background tasks with all priorities may all be taken as the overload control object.

In an example, if the load level matches a control level of the first level interval, and there are a plurality of background tasks with a priority corresponding to that control level, a target resource identification point may be selected from all resource identification points based on the load data of each resource identification point, a target background task may be selected from a plurality of background tasks based on the target resource identification point, and the target background task may be determined as an overload control object.

For example, a background task sensitive to the target resource identification point may be taken as the target background task. A background task sensitive to the target resource identification point means that when a resource occupied by the background task is adjusted, the load data of the target resource identification point changes significantly, and when a resource occupied by other background tasks other than the background task is adjusted, the load data of the target resource identification point changes slightly.

For example, a control threshold may be set for each resource identification point, e.g., control threshold 1 is set for a CPU identification point, control threshold 2 is set for a memory identification point, control threshold 3 is set for a metadata database identification point, control threshold 4 is set for a write cache identification point, control threshold 5 is set for a read cache identification point, control threshold 6 is set for a token bucket identification point, control threshold 7 is set for a storage pool identification point, and control threshold 8 is set for the cache background task identification point. For the disk read delay identification point, thresholds for the traffic control of low-priority, medium-priority, and high-priority background tasks for HDD/SSD types are set respectively. For the CPU identification point, percentage thresholds are used for the traffic control of medium-priority and high-priority background tasks. For the metadata database identification point, percentage thresholds are used for the traffic control of low-priority background tasks. For the token bucket identification point, thresholds are set for traffic control of low-priority, medium-priority, and high-priority background tasks, and read delay thresholds of medium-priority and high-priority background tasks are set for the traffic control of low-priority background tasks.

Based on a control threshold of a resource identification point and the load data of the resource identification point, if the load data exceeds the range of the control threshold, the resource identification point is taken as the target resource identification point. If the load data does not exceed the range of the control threshold, the resource identification point is not taken as the target resource identification point.

For example, if the CPU usage rate of the storage node is greater than a control threshold 1, the CPU identification point is taken as the target resource identification point; otherwise, the CPU identification point is not taken as the target resource identification point. If the remaining memory of the storage node is smaller than a control threshold 2, the memory identification point is taken as the target resource identification point. If the CPU usage rate of the metadata database is greater than a control threshold 3, the metadata database identification point is taken as the target resource identification point. If the write cache delay is greater than a control threshold 4, the write cache identification point is taken as the target resource identification point. If the read cache delay is greater than a control threshold 5, the read cache identification point is taken as the target resource identification point. If the wait token delay of IO operations is greater than a control threshold 6, the token bucket identification point is taken as the target resource identification point. If the foreground IO statistical delay is greater than a control threshold 7, the storage pool identification point is taken as the target resource identification point. If the background task read delay is greater than a control threshold 8, the cache background task identification point is taken as the target resource identification point.

After obtaining the target resource identification point, the background task sensitive to the target resource identification point may be determined. For example, the object information of the background task associated with the resource object includes the resource sensitivity type, the resource sensitivity type means which resource identification points the background task is sensitive to. Based on this, it is possible to know whether the background task is sensitive to the target resource identification point based on the object information of the background task, so as to know the background task sensitive to the target resource identification point and take the background task sensitive to the target resource identification point as a target background task. Then, the target background task may be determined as the overload control object.

For example, a background task sensitive to the token bucket identification point means that, when the resource occupied by the background task is adjusted, the wait token delay of IO operations changes significantly, and when the resource occupied by other background tasks other than the background task are adjusted, the wait token delay of IO operations change slightly.

For example, if the load level of the resource object matches a control level 1, a target background task is selected from all low-priority background tasks, and the target background task is taken as the overload control objects.

If the load level of the resource object matches a control level 2, a target background task is selected from all medium-priority background tasks, and the target background task and all low-priority background tasks are taken as the overload control object. In some examples, a target background task is selected from all medium-priority background tasks, and a target background task is selected from all low-priority background tasks, and the target background tasks are taken as the overload control object.

In an example, if the load level matches a control level of the second level interval, and there are a plurality of foreground service objects corresponding to the control level, a target resource identification point may be selected from all resource identification points based on the load data of each resource identification point, and a target foreground service object may be selected from a plurality of foreground service objects based on the target resource identification point, and the target foreground service object may be determined as the overload control object.

For example, a foreground service object sensitive to the target resource identification point may be taken as the target foreground service object. Where a foreground service object sensitive to the target resource identification point means that, when the resource occupied by a foreground service object is adjusted, the load data of the target resource identification point changes significantly, and when the resource occupied by other foreground service objects other than the foreground service object is adjusted, the load data of the target resource identification point changes slightly.

Fourthly, the overload handling (OLH) process of the distributed storage system. For example, for each resource object, such as a storage node or a storage pool, etc., after obtaining the overload control object of the resource object, the resources occupied by the overload control object may also be controlled, for example, reducing the resources occupied by the overload control object, thereby reducing the load of the resource object.

In an example, N number of resource gear levels may be obtained by a division in advance, and the resource gear level represents the size of resources that a background task or foreground service object may occupy. The resources here may be token bucket resources, processing resources, or other resources, and there are no restrictions on the type of resources, as long as the resources may be controlled to reduce the load of the resource object. For token bucket resources, the resource gear level represents the quantity of tokens (i.e., the quantity of occupied tokens in the local token bucket) that the background task or foreground service object may occupy, and the load of the resource object may be reduced by controlling the quantity of tokens. In addition, for processing resources (concurrent processing resources), the resource gear level represents the concurrency number that the background task or foreground service object may occupy, and the load of the resource object may be reduced by controlling the concurrency number.

For each resource gear level, the resource size corresponding to the resource gear level (such as the token quantity and the concurrency number) may be predetermined. For example, resource gear levels a1, a2, a3, and so on, may be obtained through division in advance, with a total of 8 resource gear levels. It is assumed that the resource gear level a1 corresponds to a resource size b1 (e.g., the resource of the local token bucket, which represents b1 number of tokens are occupied in the local token bucket), the resource gear level a2 corresponds to a resource size b2, and the resource size b2 may be greater than the resource size b1, the resource gear level a3 corresponds to a resource size b3, and so on. Each resource gear level corresponds to a resource size.

To determine a resource size corresponding to a resource gear level, the resource size corresponding to the resource gear level may be configured based on experience, or a certain strategy may be used to determine the resource size corresponding to the resource gear level. For example, based on the storage capacity of the distributed storage system, the storage capacity may be converted into an input/output operations per second (IOPS) resource under the standard IO length, e.g., 8K, (an IOPS resource under the standard IO length may be utilized to determine the quantity of tokens in a local token bucket). This IOPS resource may be divided into 8 gear levels of resource sizes (which may be evenly divided or unevenly divided). These 8 gear levels of resource sizes are the resource sizes corresponding to the 8 resource gear levels. For example, if the IOPS resource under the standard IO length is 80, the resource size b1 corresponding to resource gear level a1 is 10, the resource size b2 corresponding to resource gear level a2 is 20, ..., and the resource size b8 corresponding to resource gear level a8 is 80.

For example, a certain read/write ratio (e.g., 7:3) may be used to calculate the standard capacity provided by the resource object (such as a storage node or a storage pool), and the resource size corresponding to the resource gear level may be determined based on the capacity.

For the background tasks of the resource object, they may correspond to resource gear level a1 - resource gear level a8, and for the foreground service objects of the resource object, they may also correspond to resource gear level a1 - resource gear level a8.

For each background task associated with the resource object, the background task corresponds to a controlled resource gear level and an operating resource gear level (i.e., a current resource gear level). For each foreground service object associated with the resource object, the foreground service object corresponds to a controlled resource gear level and an operating resource gear level (i.e., a current resource gear level).

For example, assuming that the current resource gear level of a background task is a resource gear level a6, it means that the background task is currently adopting the resource size corresponding to the resource gear level a6. Assuming that the controlled resource gear level of the background task is a resource gear level a4, it means that the resource gear level currently used by the background task needs to be adjusted from the resource gear level a6 to the resource gear level a4, i.e., the background task is controlled to adopt a resource size corresponding to the resource gear level a4, thereby reducing the load of the resource object.

For each background task associated with the resource object, a reference resource gear level may be maintained for the background task, and the reference resource gear level serves as an initial controlled resource gear level when the background task is created. For each foreground service object associated with the resource object, a reference resource gear level may be maintained for the foreground service object, and the reference resource gear level serves is as an initial controlled resource gear level when the foreground service object is created. For example, assuming the reference resource gear level of the background task is the resource gear level a6, when the background task is created, the controlled resource gear level of the background task is the resource gear level a6, i.e., when the background task is created, the resource size corresponding to the resource gear level a6 is adopted. In the operating process of the background task, the controlled resource gear level may be dynamically adjusted based on the load of the resource object.

When the resource object is overloaded, the reference resource gear level of the background task may also be adjusted, so that the initial controlled resource gear level when the background task is created is reduced, thereby reducing the load of the resource object. For example, assuming that the reference resource gear level of the background task should be the resource gear level a6, however, due to the overload of the resource object, the reference resource gear level of the background task is adjusted to the resource gear level a4. In this way, when the background task is created, the controlled resource gear level of the background task is the resource gear level a4, i.e., when the background task is created, the resource size corresponding to the resource gear level a4 is adopted, instead of the resource size corresponding to the resource gear level a6.

The reference resource gear levels for the background tasks may be specified separately for different resource-sensitive background tasks, e.g., the following information may be specified in advance: the background task type, the default reference resource gear level 1 for CPU-sensitive background tasks, and the default reference resource gear level 2 for memory-sensitive background tasks. Based on this, for each background task, if the background task is a CPU-sensitive background task, the default reference resource gear level 1 is taken as the reference resource gear level for the background task, and if the background task is a memory-sensitive background task, the default reference resource gear level 2 is taken as the reference resource gear level for the background task.

In an example, when controlling the resource occupied by the overload control object, the current resource gear level (i.e., the operating resource gear level) of the overload control object may be reduced to obtain the controlled resource gear level, and the resource occupied by the overload control object may be controlled based on the controlled resource gear level. The controlled resource gear level is not lower than the lower limit value of the resource gear level of the overload control object. If the current resource gear level is the lower limit value, the current resource gear level of the overload control object is not to be reduced, i.e., the resource occupied by the overload control object is not to be controlled.

When controlling the resource occupied by the overload control object, the token quantity corresponding to the controlled resource gear level may be used to control the token bucket resource occupied by the overload control object, and/or the concurrency number corresponding to the controlled resource gear level may be used to control the processing resource occupied by the overload control object.

The resource control process for the overload control object is described below in conjunction with several specific situations.

Situation 1: The overload control object is a background task associated with the resource object.

For example, assuming that the current resource gear level of the background task is a resource gear level a6, the controlled resource gear level of the background task may be determined. The higher the load level, the lower the controlled resource gear level, and the controlled resource gear level is not lower than the lower limit value of the resource gear level of the background task (e.g., the resource gear level a2 as the lower limit value of the resource gear level), and there are no restrictions on the controlled resource gear level, and the controlled resource gear level is assumed to be the resource gear level a4. When determining the controlled resource gear level, if the current resource gear level has reached the lower limit value of the resource gear level, it means that the resource occupied by the background task is not to be controlled, and the resources occupied by other overload control objects need to be adjusted.

After obtaining the controlled resource gear level of the background task, the resource occupied by the background task may be controlled based on the controlled resource gear level. For example, the resource gear level a6 may be adjusted to the resource gear level a4, and the background task adopts the resource size corresponding to resource gear level a4. For example, the token quantity corresponding to the resource gear level a4 may be determined, and the token bucket resources occupied by the background task may be controlled based on the token quantity corresponding to resource gear level a4, i.e., the background task needs to use the token quantity corresponding to the resource gear level a4 for processing. The lower the controlled resource gear level, the smaller the token quantity, i.e., by reducing the token quantity, the purpose of reducing the load may be achieved.

In addition, the concurrency number corresponding to the resource gear level a4 may be determined, and the processing resource occupied by the background task may be controlled based on the concurrency number corresponding to the resource gear level a4, i.e., the background task needs to use the concurrency number corresponding to the resource gear level a4 for processing (i.e., performing concurrent processing on data). The lower the controlled resource gear level, the smaller the concurrency number, i.e., by reducing the concurrency number, the purpose of reducing the load may be achieved.

Situation 2: The overload control object is a foreground service object associated with the resource object.

For example, assuming that the current resource gear level of the foreground service object is a resource gear level a6, the controlled resource gear level of the foreground service object may be determined. The higher the load level, the lower the controlled resource gear level, and the controlled resource gear level is not lower than the lower limit value of the resource gear level of the foreground service object. When determining the controlled resource gear level, if the current resource gear level has reached the lower limit value of the resource gear level, it means that the resource occupied by the foreground service object will not be controlled. After obtaining the controlled resource gear level of the foreground service object, the resource occupied by the foreground service object may be controlled based on the controlled resource gear level, i.e., the foreground service object adopts the resource size corresponding to the controlled resource gear level.

For example, the token quantity corresponding to the controlled resource gear level may be determined, and the token bucket resources occupied by the foreground service object may be controlled based on the token quantity corresponding to the controlled resource gear level, i.e., the foreground service object needs to use the token quantity corresponding to the controlled resource gear level for processing, and the purpose of reducing the load may be achieved.

Situation 3: The overload control object is a token bucket object for backpressuring host IO.

For example, the controlled resource gear level of the token bucket object may be determined, and the resource occupied by the token bucket object may be controlled based on the controlled resource gear level, i.e., the token bucket object adopts the resource size corresponding to the controlled resource gear level. For example, the token quantity of the token bucket object may be determined based on the controlled resource gear level, i.e., the token bucket object is controlled to adopt the token quantity corresponding to the controlled resource gear level, and then the data writing speed and data reading speed are controlled based on this token quantity.

For example, the token quantity corresponding to the controlled resource gear level may be determined, and the token bucket resource occupied by the token bucket object may be controlled based on the token quantity corresponding to the controlled resource gear level, i.e., the token bucket object needs to adopt the token quantity corresponding to the controlled resource gear level for processing, and the purpose of reducing the load may be achieved.

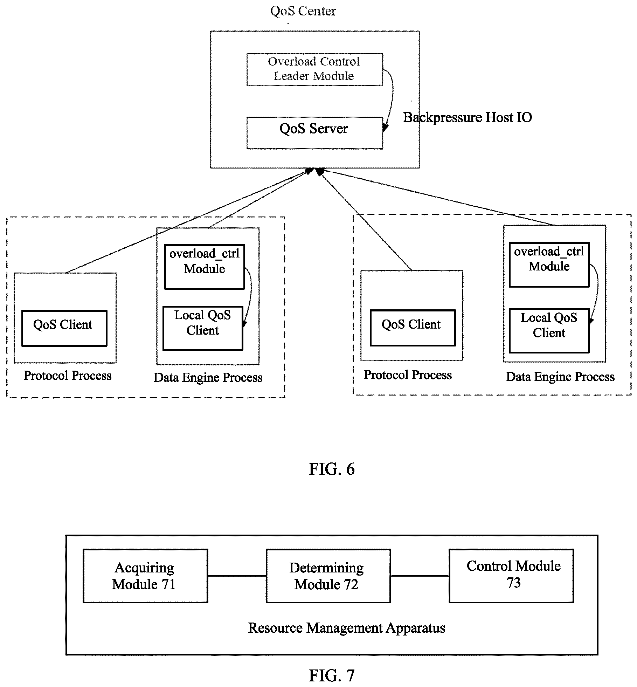

In an example, situation 1 and situation 2 are local overload control, and situation 3 is global overload control. The local overload control and the global overload control are described below. Referring to FIG. 6, which is a schematic diagram of an overload control framework. The storage nodes include a protocol process and a data engine process. The protocol process provides protocol access services, and the data engine process provides data services. Various background tasks (e.g., value-added features, metadata merging, GC, data reconstruction, etc.) run in the data engine process, and overload control relies on the distributed QoS framework.

The data engine process may include an overload_ctrl module and a local QoS client. The overload _ctrl module may recognize resource object overload (e.g., determine the load level of the resource object based on load data, and determine the overload control object based on the load level), and the overload _ctrl module performs local overload control (e.g., using situation 1 or situation 2 for local overload control). The overload_ctrl module may send the overload information of the resource object to an overload_ctrl leader module, and the overload_ctrl leader module performs global overload control (e.g., using situation 3 for global overload control).

The QoS center may also include an overload_ctrl leader module and a QoS server. The overload_ctrl module may send the overload information of the resource object to the local QoS client, the local QoS client may send the overload information of the resource object to the QoS server, and the QoS server sends the overload information of the resource object to the overload_ctrl leader module.

For situation 3, the overload_ctrl leader module may backpressure host IO based on the token quantity corresponding to the controlled resource gear level. For example, by reducing the number of tokens in the token bucket (i.e., the global token bucket), the amount of data stored in the token bucket is reduced, and when the amount of data stored in the token bucket is reduced, the amount of data that the compute node writes to the storage object is reduced. This process is called backpressuring host IO. When the amount of data that the compute node writes to the resource object is reduced, the amount of data that the resource object needs to process is reduced, which reduces the load of the resource object.

For situation 3, the scenario for global overload control may include the following: the storage pool is overloaded, where all storage nodes need to be controlled. When the storage node is severely overloaded, globally backpressuring host IO is needed. If the current load level exceeds the sum of the locally controllable levels, global overload control is relied upon to backpressure host IO.

In the above scenarios, situation 3 may be used to perform global overload control. When performing global overload control, the host IO traffic control is gradually controlled from low-priority to high-priority.

When the storage pool is overloaded or the storage node is severely overloaded, the overload information needs to be reported to the QoS center, and the QoS center performs global overload control on the overload control object associated with the resource object.

In an example, for situation 2, if the overload control object is the foreground service object of the resource object, and a plurality of different foreground service objects correspond to a plurality of priority queues, the token quantity (i.e., the token quantity corresponding to the controlled resource gear level) corresponding to the overload control object is determined, and the resource object is controlled to read data from a plurality of priority queues based on the token quantity, and the read data is processed. The plurality of priority queues share a token bucket, and different priority queues are used to control dequeuing, i.e., when data in different priority queues is dequeued, a token is taken from the token bucket.

For example, when the foreground service object corresponds to a plurality of priority queues, data may be read from a plurality of priority queues based on the token quantity. When reading data, the sequence value of each piece of data in the plurality of priority queues may be determined, and the data with the smallest sequence value is read. For example, if the sequence value of data A1 in priority queue 1 is the smallest, data A1 is read from priority queue 1, and after that, if the sequence value of data A2 in priority queue 3 is the smallest, then data A2 is read from priority queue 3, and so on.

For example, for each piece of data, the sequence value of the piece of data is determined based on the enqueue time of the piece of data and the adjustment value of the priority queue where the piece of data is located. Where the earlier the enqueue time of the piece of data, the smaller the sequence value of the piece of data, i.e., the sequence value of the piece of data is proportional to the enqueue time of the data piece. The higher the priority of the priority queue where the piece of data is located, the smaller the adjustment value of the priority queue, and the smaller the sequence value of the piece of data, i.e., the sequence value of the piece of data is inversely proportional to the priority of the priority queue where the piece of data is located.

For example, the following formula may be used to determine the sequence value of the data: T+1/Priority, this formula is just an example, and there are no restrictions on this determination method. T represents the enqueue time of the data, i.e., the time when the data is written to the priority queue. Priority represents the priority of the priority queue where the data is located, for example, the Priority of the low-priority queue is 1, the Priority of the medium-priority queue is 2, and the Priority of the high-priority queue is 3. 1/Priority represents the adjustment value of the priority queue, thus the adjustment value of the high-priority queue is 1/3, i.e., the higher the priority of the priority queue, the smaller the adjustment value.

Based on the above IO scheduling algorithm, the data with the higher priority and the earlier enqueue time is scheduled first, avoiding the situation where data is locked in the priority queue and some data may not be read for a long time.

When the data engine process creates a token bucket based on storage nodes and storage pools, an IO request is scheduled after obtaining a token. When the foreground storage resources and background storage resources are not balanced, overload control notifies the data engine process to backpressure host IO. Foreground IO and background IO are placed in foreground high/medium/low priority queues and background priority queues. The IO queuing waiting delay is controlled, and the unscheduled IO in the queue is discarded before the host IO timeout. Traffic control is performed on host IOs with high/medium/low priorities and background IOs with a background priority associated with the resource object, which implements the traffic control of different priorities through the IO scheduler.

In an example, for situation 3, if the overload control object is a token bucket object for backpressuring host IO, and the token bucket object corresponds to a plurality of priority queues, the token quantity corresponding to the overload control object is determined, and the resource object is controlled to read data from a plurality of priority queues based on that token quantity, to process the data.

For example, when the token bucket object corresponds to a plurality of priority queues, data may be read from a plurality of priority queues based on the token quantity. When reading data, the sequence value of each piece of data in a plurality of priority queues may be determined, and the piece of data with the smallest sequence value is read. For each piece of data, the sequence value of the piece of data is determined based on the enqueue time of the data and the adjustment value of the priority queue where the piece of data is located. The earlier the enqueue time of the piece of data, the smaller the sequence value of the piece of data, and the higher the priority of the priority queue where the piece of data is located, the smaller the adjustment value of the priority queue, and the smaller the sequence value of the piece of data.

Fifthly, the overload recovery (OLC) process of the distributed storage system. For example, after controlling the resource occupied by the overload control object, the statistics on the load level of the resource object may continue to be conducted. If the load level is lower than a preset control level (the preset control level may be the lowest/smallest control level in the first level interval, e.g., control level 1, and control level 1 corresponds to load level 4), e.g., the load level of the resource object is 1, 2, 3, in this case, it means that the resource object is underloaded, and the load of the overload control object may be recovered.

In an example, when it is identified that the resource object is underloaded, such as the load level is 1, 2, 3, etc., a load of each overload control object may be recovered in sequence, and the sequence of recovering the foreground services before the background tasks is adopted. Based on this, when recovering the load of the overload control objects, the load of the token bucket object for backpressuring host IO may be recovered first, and the statistics on the load level of the resource object may be re-conducted.

If the load level is still lower than the preset control level (i.e., the resource object is recognized as underloaded), the load of the foreground service objects of the resource object may continue to be recovered, and the statistics on the load level of the resource object may be re-conducted. If the load level is still lower than the preset control level (i.e., the resource object is recognized as underloaded), the load of the background tasks of the resource object may continue to be recovered.

In an example, when recovering the load of the foreground service objects of the resource object, the recovery may be controlled step by step in the sequence of priorities from high to low. For example, the load of high-priority foreground service objects is recovered first, if the load level is lower than the preset control level, then the load of medium-priority foreground service objects is recovered, if the load level is lower than the preset control level, then the load of low-priority foreground service objects is recovered.

When recovering the load of the background tasks of the resource object, the recovery may be controlled step by step in the sequence of priorities from high to low. For example, the load of high-priority background tasks is first recovered, if the load level is lower than the preset control level, then the load of medium-priority background tasks is recovered, if the load level is lower than the preset control level, then the load of low-priority background tasks is recovered.

From the above technical solution, it may be seen that, in the example of the present disclosure, a method for timely and accurate recognition of overload in storage nodes and storage pools is provided, and a method for distributed storage overload control is provided, to ensure the reliability of key businesses. A method for distributed storage overload recovery is provided to ensure the smooth recovery of services. By providing a method for distributed storage overload recognition, overload control, and overload recovery, the I/O has a more stable delay, avoiding abnormalities in the distributed storage system, and effectively improving the operational stability and service reliability of the distributed storage system. Background tasks can be controlled to avoid that sudden background tasks overwhelm the distributed storage system, and minimize the impact on foreground IO as much as possible, e.g., deleting snapshots, splitting volumes, background synchronization, GC, etc. Key background tasks that require a balance between the foreground and background are timely recovered to ensure business continuity and reliability, and ensure the reliability of high-priority services.

Based on the same application concept as the above method, examples of the present disclosure proposes a resource management apparatus, applied to a distributed storage system, which includes a plurality of resource objects. Referring to FIG. 7, which is a structure diagram of a resource management apparatus. The apparatus may include:
an acquiring module 71, which is used to, for each resource object, acquire load data for each of at least one resource identification point comprised in the resource object, where the load data represents the resource usage of the resource identification point; a determining module 72, which is used to, determine a load level of the resource object based on the load data of each resource identification point; if it is determined based on the load level that the resource object is overloaded, determine an overload control object based on the load level, where the overload control object includes at least one of a background task of the resource object, a foreground service object of the resource object, and a token bucket object for backpressuring host IO; and the background task and the foreground service object share a local token bucket of the resource object; and a control module 73, which is to control a resource occupied by the overload control object.

In an example, if the resource object is a storage node, then the resource object includes at least one of the following resource identification points: a CPU identification point, a memory identification point, a metadata database identification point, a write cache identification point, a read cache identification point, a token bucket identification point, a storage pool identification point, and a cache background task identification point; if the resource object is a storage pool, the resource object includes at least one of the following resource identification points: a memory identification point, a write cache identification point, a read cache identification point, a token bucket identification point, and a cache background task identification point; where the load data of the CPU identification point includes a CPU usage rate of the storage node; load data of the memory identification point includes a remaining memory of the storage node; load data of the metadata database identification point includes a CPU usage rate of the metadata database; load data of the write cache identification point includes a write cache watermark and a delay of the write cache; load data of the read cache identification point includes a read cache delay; load data of the token bucket identification point includes a wait token delay of an IO operation; load data of the storage pool identification point includes a foreground IO statistical delay; and load data of the cache background task identification point includes a background task read delay.

In an example, when the determining module 72 determines an overload control object based on the load level, a first level interval includes K number of control levels, the resource object includes background tasks with K number of priorities, the K number of priorities are in one-to-one correspondence with the K number of control levels; if the load level matches a control level in the first level interval, the overload control object includes a background task of a priority corresponding to the control level.

In some examples, the second level interval includes P number of control levels, the resource object includes foreground service objects with P number of priorities, the P number of priorities are in one-to-one correspondence with the P number of control levels; if the load level matches a control level of the second level interval, the overload control object includes a foreground service object with a priority corresponding to that control level and background tasks with all priorities.

Alternatively, if the load level matches a third level interval, the overload control object includes the token bucket object, foreground service objects with all priorities, and background tasks with all priorities.

The control levels of the first level interval are lower than the control levels of the second level interval, and the control levels of the second level interval are lower than the control levels of the third level interval.

In an example, when controlling a resource occupied by the overload control object, the control module 73 is specifically used to: lower or raise the current resource gear level of the overload control object to obtain a controlled resource gear level.

Based on the controlled resource gear level, the resource occupied by the overload control object is controlled; where a token bucket resource occupied by the overload control object is controlled based on the token quantity corresponding to the controlled resource gear level, and/or, a processing resource occupied by the overload control object is controlled based on a concurrency number corresponding to the controlled resource gear level; where the lower the controlled resource gear level, the smaller the token quantity and concurrency number corresponding to the controlled resource gear level.

In an example, when determining the overload control object based on the load level, the determining module 72 is specifically used to: if the load level matches a control level of the first level interval, and there are a plurality of background tasks with a priority corresponding to the control level, select a target resource identification point from all resource identification points based on the load data of each resource identification point, and select a target background task from the plurality of background tasks based on the target resource identification point; where a background task sensitive to the target resource identification point is selected as the target background task; the background task sensitive to the target resource identification point means that when the resource occupied by the background task is adjusted, load data of the target resource identification point changes significantly, and when a resource occupied by other background tasks other than the background task is adjusted, the load data of the target resource identification point changes slightly.

The target background task is determined as the overload control object.

In an example, when controlling the resource occupied by the overload control object, the control module 73 is specifically used to: if the overload control object is a foreground service object of the resource object, and a plurality of different foreground service objects correspond to a plurality of priority queues, determine a token quantity corresponding to the overload control object, control the resource object to read data from the plurality of priority queues based on the token quantity, and process the read data; where the plurality of priority queues share a token bucket; if the overload control object is a token bucket object for backpressuring host IO, and the token bucket object corresponds to a plurality of priority queues, determine a token quantity corresponding to the overload control object, control the resource object to read data from the plurality of priority queues based on the token quantity, and process the read data.

The control module 73, when reading data from the plurality of priority queues based on the token quantity, determines a sequence value of each piece of data in the plurality of priority queues and reads a piece of data with a smallest sequence value.

For each piece of data, a sequence value of the piece of data is determined based on an enqueue time of the piece of data and an adjustment value of a priority queue where the piece of data is located; where the earlier the enqueue time of the piece of data, the smaller the sequence value of the piece of data, and the higher a priority of the priority queue, the smaller the adjustment value, and the smaller the sequence value of the piece of data.

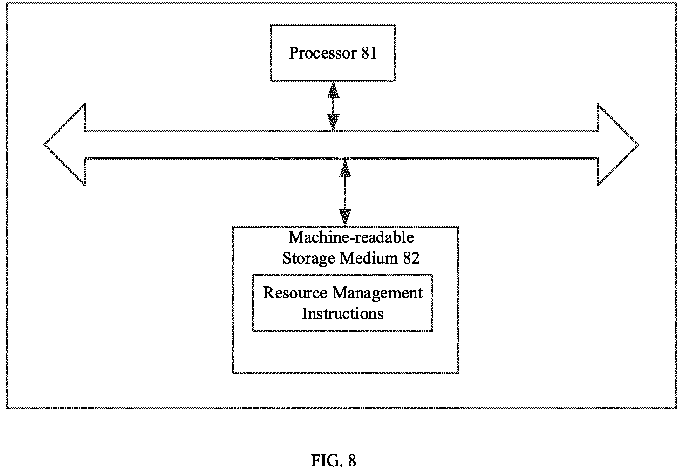

Based on the same application concept as the above method, an example of the present disclosure proposes an electronic device, referring to FIG. 8, the electronic device includes: a processor 81 and a machine-readable storage medium 82, the machine-readable storage medium 82 stores machine-executable instructions that may be executed by the processor 81; the processor 81 is to execute machine-executable instructions to perform the resource management method disclosed in the examples above.

Based on the same application concept as the above method, an example of the present disclosure further provides a machine-readable storage medium, the machine-readable storage medium stores a plurality of computer instructions, when the computer instructions are executed by a processor, the resource management method disclosed in the above examples of the present disclosure may be performed.

The machine-readable storage medium may be any electronic, magnetic, optical, or other physical storage apparatus, and may contain or store information, such as executable instructions, data, and so on. For example, the machine readable storage medium may be a Radom Access Memory (RAM), a volatile memory, a non-volatile memory, a flash memory, a storage drive (e.g. hard disk drive), a solid state hard disk, any type of storage disk (e.g., optical disk, DVD, etc.), or a similar storage medium, or a combination thereof.

Based on the same application concept as the above method, examples of the present disclosure further provide a computer program product including a computer program that performs the resource management method disclosed in the above example of the present disclosure when executed by a processor.

Those skilled in the art should understand that, the implementations of the present disclosure may be provided as a method, a system, or a computer program product. Therefore, the present disclosure may take the form of an entirely hardware implementation, an entirely software implementation, or an implementation combining both software and hardware aspects. Moreover, the present disclosure may take the form of a computer program product implemented on one or more computer-usable storage media (including, but not limited to, disk memory, CD-ROM, optical memory, etc.) containing computer-usable program code.

The above are only implementations of the present disclosure and are not intended to limit the present disclosure. For those skilled in the art, this disclosure may have various modifications and changes. Any modification, equivalent replacement, and improvement made within the spirit and principle of this disclosure shall be all included in the scope of claims of the present disclosure.

## Claims

1. A resource management method, wherein the method is applied to a distributed storage system comprising a plurality of resource objects, the method comprises:
for each resource object, acquiring load data of each of at least one resource identification point comprised in the resource object, wherein the load data represents resource usage of the resource identification point;
determining a load level of the resource object based on the load data of each resource identification point;
in response to determining that the resource object is overloaded based on the load level, determining an overload control object based on the load level, wherein the overload control object comprises at least one of a background task of the resource object, a foreground service object of the resource object, and a token bucket object for backpressuring host IO, and the background task and the foreground service object share a local token bucket of the resource object; and
controlling a resource occupied by the overload control object.

2. The method according to claim 1, wherein
in a case that the resource object is a storage node, the resource object comprises at least one of following resource identification points: a CPU identification point, a memory identification point, a metadata database identification point, a write cache identification point, a read cache identification point, a token bucket identification point, a storage pool identification point, and a cache background task identification point; and
in a case that the resource object is a storage pool, the resource object comprises at least one of following resource identification points: a memory identification point, a write cache identification point, a read cache identification point, a token bucket identification point, and a cache background task identification point;
wherein load data of the CPU identification point comprises a CPU usage rate of a storage node;
load data of the memory identification point comprises a remaining memory of a storage node;
load data of the metadata database identification point comprises a CPU usage rate of a metadata database;
load data of the write cache identification point comprises a write cache watermark and a write cache delay;
load data of the read cache identification point comprises a read cache delay;
load data of the token bucket identification point comprises a wait token delay of an IO operation;
load data of the storage pool identification point comprises a foreground IO statistical delay; and
load data of the cache background task identification point comprises a background task read delay.

3. The method according to claim 2, wherein the method further comprises one or more of:
determining a target ratio between a data length of an IO operation and a set standard IO length, and determining a wait token delay of the IO operation based on the target ratio and a standard delay corresponding to the standard IO length; wherein the standard delay represents a delay for processing data of the standard IO length;
in a case that the storage node comprises a plurality of CPU cores, determining a usage rate of a CPU core bound to an IO operation, and determining a CPU usage rate of the storage node based on the usage rate;
in a case that the storage node comprises a plurality of CPU cores, determining a usage rate of a CPU core bound to a metadata database, and determining a CPU usage rate of the metadata database based on the usage rate.

4. The method according to claim 1, wherein a first level interval comprises K number of control levels, the resource object comprises background tasks with K number of priorities, the K number of priorities are in one-to-one correspondence with the K number of control levels; in response to the load level matching a control level of the first level interval, the overload control object comprises a background task with a priority corresponding to the control level;
or, a second level interval comprises P number of control levels, the resource object comprises foreground service objects with P number of priorities, the P number of priorities are in one-to-one correspondence with the P number of control levels, and in response to the load level matching a control level of the second level interval, the overload control object comprises a foreground service object with a priority corresponding to the control level and background tasks with all priorities;
or, in response to the load level matching a control level of a third level interval, the overload control object comprises the token bucket object, foreground service objects with all priorities, and background tasks with all priorities;
wherein the control levels of the first level interval are lower than the control levels of the second level interval, and the control levels of the second level interval are lower than the control levels of the third level interval.

5. The method according to claim 1 or 4, wherein
the controlling a resource occupied by the overload control object comprises:
lowering or raising a current resource gear level of the overload control object to obtain a controlled resource gear level;
controlling the resource occupied by the overload control object based on the controlled resource gear level; wherein a token bucket resource occupied by the overload control object is controlled based on a token quantity corresponding to the controlled resource gear level, and/or, a processing resource occupied by the overload control object is controlled based on a concurrency number corresponding to the controlled resource gear level; wherein the lower the controlled resource gear level, the smaller the token quantity and the concurrency number corresponding to the controlled resource gear level.

6. The method according to claim 4, wherein
the determining an overload control object based on the load level comprises:
in response to the load level matching a control level of the first level interval, and there being a plurality of background tasks with a priority corresponding to the control level, selecting a target resource identification point from all resource identification points based on the load data of each resource identification point, and selecting a target background task from the plurality of background tasks based on the target resource identification point, wherein a background task sensitive to the target resource identification point is selected as the target background task, and the background task sensitive to the target resource identification point means that when a resource occupied by the background task is adjusted, load data of the target resource identification point changes significantly, and when a resource occupied by other background tasks other than the background task is adjusted, the load data of the target resource identification point changes slightly; and
determining the target background task as the overload control object.

7. The method according to claim 1, wherein
the controlling a resource occupied by the overload control object comprises:
in response to the overload control object being a foreground service object of the resource object, and a plurality of different foreground service objects corresponding to a plurality of priority queues, determining a token quantity corresponding to the overload control object, controlling the resource object to read data from the plurality of priority queues based on the token quantity, and processing the read data; wherein the plurality of priority queues share a token bucket;
in response to the overload control object being a token bucket object for backpressuring host IO, and the token bucket object corresponding to a plurality of priority queues, determining a token quantity corresponding to the overload control object, controlling the resource object to read data from the plurality of priority queues based on the token quantity, and processing the read data;
wherein when reading data from the plurality of priority queues based on the token quantity, a sequence value of each piece of data in the plurality of priority queues is determined, and a piece of data with a smallest sequence value is read; and
for each piece of data, a sequence value of the piece of data is determined based on an enqueue time of the piece of data and an adjustment value of a priority queue where the piece of data is located; wherein in response to the enqueue time of the piece of data being earlier, the sequence value of the piece of data is smaller, and in response to a priority of the priority queue being higher, the adjustment value is smaller, and the sequence value of the piece of data is smaller.

8. The method according to claim 1, wherein
after the controlling a resource occupied by the overload control object, the method further comprises:
in response to determining that the resource object is underloaded based on the load level, recovering a load of the overload control object; wherein when recovering the load of the overload control object, a load of a token bucket object for backpressuring host IO is first recovered, in response to determining that the resource object is underloaded based on the load level, a load of the foreground service object of the resource object is sequentially recovered, and in response to determining that the resource object is underloaded based on the load level, a load of the background task of the resource object is sequentially recovered.

9. A resource management apparatus, wherein the apparatus is applied to a distributed storage system comprising a plurality of resource objects, the apparatus comprises:
an acquiring module, which is to: for each resource object, acquire load data of each of at least one resource identification point comprised in the resource object, wherein the load data represents resource usage of the resource identification point;
a determining module, which is to: determine a load level of the resource object based on the load data of each resource identification point; and in response to determining that the resource object is overloaded based on the load level, determine an overload control object based on the load level, wherein the overload control object comprises at least one of a background task of the resource object, a foreground service object of the resource object, and a token bucket object for backpressuring host IO, and the background task and the foreground service object share a local token bucket of the resource object; and
a control module, which is to: control a resource occupied by the overload control object.

10. The apparatus according to claim 9, wherein
in a case that the resource object is a storage node, the resource object comprises at least one of following resource identification points: a CPU identification point, a memory identification point, a metadata database identification point, a write cache identification point, a read cache identification point, a token bucket identification point, a storage pool identification point, and a cache background task identification point; and in a case that the resource object is a storage pool, the resource object comprises at least one of following resource identification points: a memory identification point, a write cache identification point, a read cache identification point, a token bucket identification point, and a cache background task identification point;
wherein load data of the CPU identification point comprises a CPU usage rate of a storage node;
load data of the memory identification point comprises a remaining memory of a storage node;
load data of the metadata database identification point comprises a CPU usage rate of a metadata database;
load data of the write cache identification point comprises a write cache watermark and a write cache delay;
load data of the read cache identification point comprises a read cache delay;
load data of the token bucket identification point comprises a wait token delay of an IO operation;
load data of the storage pool identification point comprises a foreground IO statistical delay; and
load data of the cache background task identification point comprises a background task read delay.

11. The apparatus according to claim 9, wherein
when the determining module determines an overload control object based on the load level, a first level interval comprises K number of control levels, the resource object comprises background tasks with K number of priorities, the K number of priorities are in one-to-one correspondence with the K number of control levels; in response to the load level matching a control level of the first level interval, the overload control object comprises a background task with a priority corresponding to the control level;
or, a second level interval comprises P number of control levels, the resource objects comprises foreground service objects with P number of priorities, the P number of priorities are in one-to-one correspondence with the P number of control levels, and in response to the load level matching a control level of the second level interval, the overload control object comprises a foreground service object with a priority corresponding to the control level and background tasks with all priorities;
or, in response to the load level matching a control level of a third level interval, the overload control object comprises the token bucket object, foreground service objects with all priorities, and background tasks with all priorities;
wherein the control levels of the first level interval are lower than the control levels of the second level interval, and the control levels of the second level interval are lower than the control levels of the third level interval.

12. The apparatus according to claim 9 or 11, wherein
when controlling a resource occupied by the overload control object, the control module is specifically to:
lower or raise a current resource gear level of the overload control object to obtain a controlled resource gear level;
control the resource occupied by the overload control object based on the controlled resource gear level; wherein a token bucket resource occupied by the overload control object is controlled based on a token quantity corresponding to the controlled resource gear level, and/or, a processing resource occupied by the overload control object is controlled based on a concurrency number corresponding to the controlled resource gear level; wherein the lower the controlled resource gear level, the smaller the token quantity and the concurrency number corresponding to the controlled resource gear level.

13. The apparatus according to claim 11, wherein
when determining the overload control object based on the load level, the determining module is specifically to:
in response to the load level matching a control level of the first level interval, and there being a plurality of background tasks with a priority corresponding to the control level, select a target resource identification point from all resource identification points based on the load data of each resource identification point, and select a target background task from the plurality of background tasks based on the target resource identification point, wherein a background task sensitive to the target resource identification point is selected as the target background task, and the background task sensitive to the target resource identification point means that when a resource occupied by the background task is adjusted, load data of the target resource identification point changes significantly, and when a resource occupied by other background tasks other than the background task is adjusted, the load data of the target resource identification point changes slightly; and
determine the target background task as the overload control object.

14. The apparatus according to claim 9, wherein
when controlling a resource occupied by the overload control object, the control module is specifically to:
in response to the overload control object being a foreground service object of the resource object, and a plurality of different foreground service objects corresponding to a plurality of priority queues, determine a token quantity corresponding to the overload control object, control the resource object to read data from the plurality of priority queues based on the token quantity, and process the read data; wherein the plurality of priority queues share a token bucket;
in response to the overload control object being a token bucket object for backpressuring host IO, and the token bucket object corresponding to a plurality of priority queues, determine a token quantity corresponding to the overload control object, control the resource object to read data from the plurality of priority queues based on the token quantity, and process the read data;
wherein when reading data from the plurality of priority queues based on the token quantity, the control module determines a sequence value of each piece of data in the plurality of priority queues, and reads a piece of data with a smallest sequence value; and
for each piece of data, determines a sequence value of the piece of data based on an enqueue time of the piece of data and an adjustment value of a priority queue where the piece of data is located; wherein in response to the enqueue time of the piece of data being earlier, the sequence value of the piece of data is smaller, and in response to a priority of the priority queue being higher, the adjustment value is smaller, and the sequence value of the piece of data is smaller.

15. An electronic device, comprising: a processor and a machine-readable storage medium, wherein the machine-readable storage medium stores machine-executable instructions that can be executed by the processor, and the processor is to execute the machine-executable instructions to perform the method according to any one of claims 1-8.
